# EUROPÄISCHE PATENTSCHRIFT

(11) **EP 0 853 524 B1**
(45) Veröffentlichungstag und Bekanntmachung des Hinweises auf die Patenterteilung: **11.08.1999**
(21) Anmeldenummer: 96933410.1
(22) Anmeldetag: 27.09.1996
(51) Int. Cl.: B23K 26/02, B23K 26/04, B23K 26/08, B23K 26/00, B29C 53/00, B31B 1/00

(54) **VERFAHREN UND VORRICHTUNG ZUM SCHNEIDEN, PERFORIEREN ODER BESCHRIFTEN WIEDERKEHRENDER MUSTER IN KONTINUIERLICH BEWEGTES FLACHMATERIAL**
METHOD AND DEVICE FOR CUTTING, PERFORATING OR INSCRIBING REPEAT PATTERNS IN CONTINUOUSLY MOVING FLAT MATERIAL
PROCEDE ET DISPOSITIF PERMETTANT DE REPRODUIRE PAR DECOUPAGE, PER AGE OU IMPRESSION DES MODELES RECURRENTS DANS UN MATERIAU PLAT DEPLACE EN CONTINU

(30) Priorität: 07.10.1995 DE 19537467
(43) Veröffentlichungstag der Anmeldung: 22.07.1998
(73) Patentinhaber: SIG Combibloc GmbH, 52441 Linnich (DE)
(72) Erfinder: RICHTER, Anke, D-52441 Linnich (DE); SCHMIDT, Holger, D-52499 Baesweiler (DE); SCHMIDT, Eberhard, D-07747 Jena (DE); SCHMIEDER, Frank, D-07745 Jena (DE); WEITEDER, Hans, D-52134 Herzogenrath (DE); KUTSCHKI, Uwe, D-07747 Jena (DE); MOSIG, Michael, D-07747 Jena (DE); NITTNER, Michael, D-07745 Jena (DE)
(74) Vertreter: Thielmann, Andreas
(86) Internationale Anmeldenummer: EP9604222
(87) Internationale Veröffentlichungsnummer: WO9713611

(56) Entgegenhaltungen:
- EP-A- 0 473 517
- US-A- 4 121 595
- US-A- 4 288 680
- US-A- 4 568 815

## Beschreibung

Die Erfindung betrifft ein Verfahren zum Schneiden, Perforieren oder Beschriften von wiederkehrenden Mustern in kontinuierlich bewegtes Flachmaterial, insbesondere Verbundmaterial, durch örtliche Verdampfung des Flachmaterials mit wenigstens einem steuerbaren Laserstrahl aus wenigstens einem Strahlablenksystem, wobei jeder Laserstrahl relativ zum Flachmaterial in zwei senkrecht zueinander stehenden Richtungen x und y aus einem festen Punkt bewegt wird, und eine entsprechende Vorrichtung.

Aus der EP 0 357 841 A 1 ist ein Verfahren zur Erzeugung von Sollbruchlinien/Perforationen mittels Laserstrahlen bekannt. Zur örtlichen Verdampfung eines Teiles von ein- oder mehrlagigem Verpackungsmaterial dient dort ein steuerbarer Laserstrahl, um sich wiederholende Bilder/Muster bei kontinuierlicher Bewegung der Verpackungsmaterialbahn zu erzeugen. Schnelle Geschwindigkeitswechsel lassen sich mit dem bekannten Verfahren nicht durchführen. Die Startsignale für die Einbringung der Strukturen werden durch Detektion wiederkehrender gedruckter Bilder auf dem Verpackungsmaterial erzeugt. Auf diese Weise stehen die eingebrachten Linien/Perforationen in Übereinstimmung mit dem auf der Materialbahn vorhandenen Druckmuster.

Dadurch, daß bei dem bekannten Verfahren die vorhandenen Druckmuster zur Ansteuerung des Laserscansystems benötigt werden, ist eine Bearbeitung von unbedrucktem Material nicht möglich. Des weiteren führt eine fehlerhafte Bedruckung der Materialbahn durch die Abhängigkeit vom Druckmuster zu einer fehlerhaften Einbringung der mit dem Laserstrahl herzustellenden Linie bzw. Perforation.

Bei der bekannten Vorrichtung wird die Oberflächengeschwindigkeit mit einem inkrementalen rotatorischen Geber ermittelt. Während der Erzeugung des Schnittes bzw. der Perforation wird die Brennweite des Laserstrahles so eingestellt, daß der Brennpunkt immer gleich ist. Gleichzeitig erfolgt eine Kontrolle der wiederkehrenden Bilder auf dem Verpackungsmaterial mit der Rückkopplung auf die musterabhängigen Steuersignale, um die Einkerbungen registerhaltig zu den wiederkehrenden Mustern herstellen zu können.

Des weiteren sind auch Laser-Strahlablenksysteme für sich bekannt, in ihnen werden zur Ablehnkung des Laserstrahls Spiegelgalvanometersysteme verwendet, die gleichfalls für sich bekannt sind. Hier wird beispielsweise auf die FR 25 76 836 A 1 verwiesen, in der ein Lasersystem beschrieben ist, das in der x- und y-Richtung stationär und nur in z-Richtung variabel ist, um die Brennweite des Laserstrahles einzustellen.

Aufgabe der Erfindung ist es, ein Verfahren und eine Vorrichtung zum Schneiden oder Perforieren wiederkehrender Muster in kontinuierlich bewegtes Flachmaterial so auszugestalten und weiterzubilden, daß eine zu den Knick- bzw. Falzkanten registerhaltige Musterherstellung auch in unbedrucktes Material bei beliebigen Geschwindigkeiten ermöglicht wird.

Insbesondere sollen Bahngeschwindigkeiten bis zu 300 m/min erreicht werden können.

Diese Aufgabe ist verfahrensmäßig durch die folgenden Schritte gelöst:
- Detektieren der Bewegungsgeschwindigkeit des Flachmaterials,
- Aufbringen von Knick- oder Falzkanten auf das bewegte Flachmaterial und Detektieren ihrer Lage,
- Ansteuerung des Strahlablenksystems zur Ausführung des Schneid-, Perforier- oder Schreib-Vorgangs in Abhängigkeit eines durch das Detektieren der Knick- oder Falzkanten erzeugten Synchronisations-Impulses und der detektierten Bewegungsgeschwindigkeit des Flachmaterials und
- Überwachung der Strahllage/Strahlintensität jedes Laserstrahls in Abhängigkeit von der ermittelten Bewegungsgeschwindigkeit des Flachmaterials und den ermittelten Knick- oder Falzkanten.

Das Aufbringen von Knick- oder Falzkanten sowie das Detektieren ihrer Lage kann auch ein einziger Vorgang sein, wie es bei der in den Figuren beschriebenen Ausführungsform der Fall ist.

In vorteilhafter Ausgestaltung der Erfindung wird dabei die Position des erzeugten Musters zu den aufgebrachten Knick- oder Falzkanten überwacht und reguliert.

Hinsichtlich der Vorrichtung wird die Aufgabe dadurch gelöst, daß ein Element zur Ermittlung der Geschwindigkeit des Flachmaterials vorgesehen ist, daß wenigstens ein Prägewerkzeug zum Einbringen von Knick- oder oder Falzkanten in das bewegte Flachmaterial vorgesehen ist und daß das Prägewerkzeug mit einem Inkrementalgeber versehen ist, mit dem die Lage der Prägewerkzeugkanten in bezug auf das Flachmaterial detektierbar ist, wodurch ein Synchronisations-Impuls zur Ansteuerung des Strahlablenksystems bzw. der Strahlablenksysteme erzeugt wird, die den Schneid-, Perforier- oder Schreib-Vorgang ausführen.

Mit der erfindungsgemäßen Vorrichtung wird geschwindigkeitsunabhängig eine registerhaltige Abhängigkeit zwischen Knick- oder Falzmuster und dem Schnitt bzw. der Laserperforation oder -beschriftung bewirkt. Anders als beim weiter oben beschriebenen Stand der Technik kann also der Schnitt, die Perforation oder die Beschriftung auch auf einer unbedruckten Materialbahn erzeugt werden.

Des weiteren sind erfindungsgemäß Mittel vorhanden, mit denen die Position der erzeugten Muster zu den aufgebrachten Knick- oder Falzkanten überwacht und reguliert werden. Hierfür eignet sich insbesondere ein Bildverarbeitungssystem.

Die Kopplung eines Inkrementalgebers an das walzenförmige Prägewerkzeug zur Knick- oder Falzkantenerzeugung ermöglicht eine exakte Oberflächengeschwindigkeitserfassung gekoppelt mit einer Kontrolle der Position der Einbringung der Knick- oder Falzkante. Dazu wird die Lage der Prägewerkzeuge über dem Walzenumfang mit Inkrementalgebern versehen sowie eine Nullageposition des Werkzeugs bzw. der Werkzeugkanten definiert.

Bei der erfindungsgemäßen Vorrichtung ist das Prägewerkzeug in Laufrichtung des Flachmaterials entweder vor dem Laser oder aber auch hinter dem Laser angeordnet. Der örtliche Versatz zwischen Prägewerkzeug und Strahlablenksystem kann dabei bis zu mehreren Metern betragen. In diesem Bereich auftretende Dehnungserscheinungen lassen sich durch Zug-/ Druckdifferenzermittlung mittels des Steuerrechners kompensieren, so daß Genauigkeiten ≤ 0,5 mm bezüglich der Konturentreue der Perforationsfiguren eingehalten werden können. Durch Variation der Differenz der Zählimpulse des Inkrementalgebers für die Oberflächengeschwindigkeit zu den Zählimpulsen des Inkrementalgebers am Prägewerkzeug können die zu erzeugenden Strukturen in oder entgegen der Bandlaufrichtung in 0,01 mm-Schritten verschoben bzw. positioniert werden.

Das erfindungsgemäße Verfahren ist besonders vorteilhaft, da praktisch weißes bzw. unbedrucktes Material mit entsprechenden Perforationsfiguren oder Beschriftungen versehen werden kann, die stets in ihrer Lage zu den Knick- oder Falzkanten der einzelnen, immer wiederkehrenden Verpackungszuschnitte definiert gleichbleibend ausgerichtet bzw. angeordnet sind.

Besonders zweckmäßig ist bei der erfindungsgemäßen Vorrichtung die Verwendung eines geschlossenen CO₂-Lasers, also eines Lasers ohne äußere Gaszufuhr. Aufgrund der Ablenkung des Laserstrahls aus einem festen Punkt heraus sind notwendigerweise unterschiedliche Brennweiten nötig, so daß eine weitere Lehre der Erfindung vorsieht, daß die Intensität des Laserstrahls veränderbar ist. Dies kann im Rahmen der Erfindung einerseits dadurch geschehen, daß zur Veränderung der Strahlintensität einer Optik zur Verstellung der Brennweite der z-Achse des Laserstrahls eingesetzt wird. Alternativ ist es jedoch auch möglich, daß die Leistung des Lasers zur Veränderung dessen Strahlintensität beeinflußt wird.

Zur Ermittlung der Bahngeschwindigkeit des Flachmaterials läßt sich entweder ein Inkrementalgeber oder aber auch ein Laserdoppleranemometer einsetzen.

Um die Absorption der Laserstrahlung durch Staub zu vermeiden bzw. zu vermindern, ist in weiterer Ausgestaltung der Erfindung in Materiallaufrichtung hinter dem Laserscansystem eine Absaughaube zur Entfernung des bei der örtlichen Verdampfung anfallenden Staubes vorgesehen. Dies ist bereits aus Umweltbelastungsgründen und auch insbesondere immer dann zweckmäßig, wenn aus dem Flachmaterial Packungen zur Aufnahme von Lebensmitteln hergestellt werden sollen.

Die Erfindung wird nachfolgend anhand einer zwei bevorzugte Ausführungsbeispiele darstellenden Zeichnung näher erläutert. In der Zeichnung zeigen:
- Fig. 1: ein schematischen Blockschaltbild einer erfindungsgemäßen Vorrichtung,
- Fig. 2: die Anordnung von Laserscansystemen der erfindungsgemäßen Vorrichtung in einem ersten Ausführungsbeispiel,
- Fig. 3: die Anordnung von Laserscansystemen der erfindungsgemäßen Vorrichtung in einem zweiten Ausführungsbeispiel und
- Fig. 4: ein Laserscansystem der erfindungsgemäßen Vorrichtung einzeln in perspektivischer Darstellung.

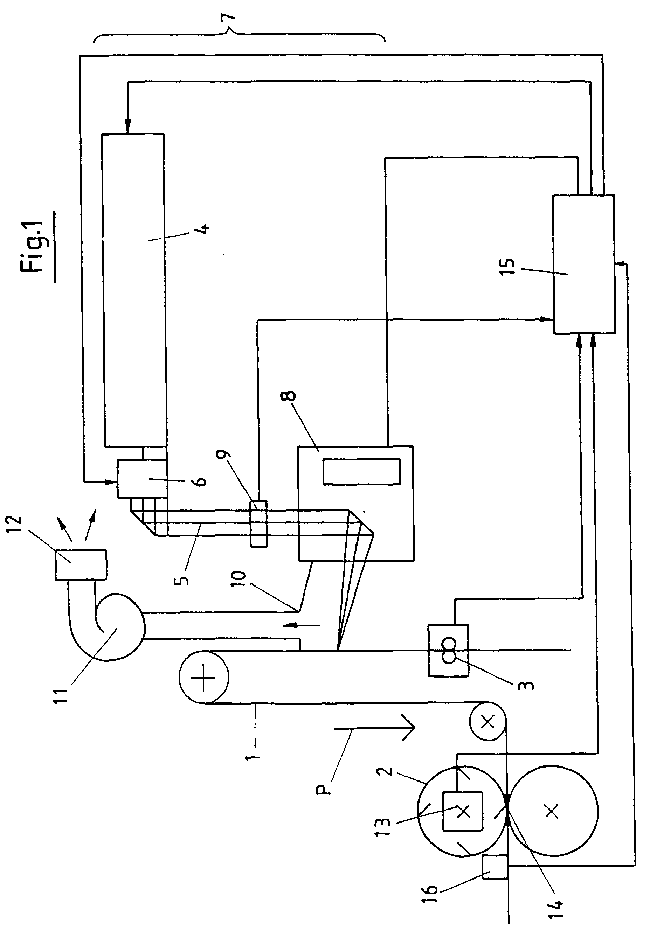

In Fig. 1 ist eine erfindungsgemäße Vorrichtung zur Bearbeitung von sich ständig wiederholenden Verpackungszuschnitten unter Verwendung noch ungeschnittenen Flachmaterials 1 schematisch dargestellt. In der Darstellung läuft eine Bahn aus Flachmaterial 1 um zwei nicht näher bezeichnete Rollen in Richtung des Pfeiles P und wird einem aus einem Walzenpaar 2 bestehenden Prägewerkzeug zugeführt. Die Bandgeschwindigkeit wird dabei mittels eines Inkrementalgebers 3 festgestellt. Nicht dargestellt ist, daß zur Detektion der Bandgeschwindigkeit auch ein Laserdoppleranemometer eingesetzt werden kann.

Die Bearbeitung des Flachmaterials 1 erfolgt dabei durch einen von einem Laser 4 erzeugten Laserstrahl 5, dessen Intensität durch eine Verstellung der z-Achse mittels einer dynamischen Linsenverstelleinheit 6 so korrigiert wird, daß der Brennpunkt des Laserstrahls auch in ausgelenkter Richtung auf der Ebene des Flachmaterials 1 liegt. Der Laser 4 und die dynamische Linsenverstelleinheit 6 sind Teil eines Strahlablenksystem 7, die Auslenkung des Laserstrahls 5 erfolgt dabei in einem x-y-Scanner 8. Ein Strahlanalyse- bzw. -überwachungssystem 9 dient zur Überwachung von Strahllage, Strahlleistung und Strahlintensitätsverteilung des Laserstrahls 5.

Ferner ist eine Absaughaube 10 oberhalb des Behandlungsbereichs des Flachmaterials 1 angedeutet, über dem der durch die örtliche Verdampfung anfallende Staub mittels eines Gebläses 11 abgesaugt und einem Filter 12 zugeleitet wird.

Erfindungsgemäß ist nun das Prägewerkzeug mit einem weiteren Inkrementalgeber 13 versehen, mit dem die Lage der Prägewerkzeugkanten 14 in bezug auf das Flachmaterial 1 festgestellt werden kann. Ein Zentralrechner 15 sorgt für eine Regelung bei der Aufbringung der gewünschten Perforationen in bezug auf die Knick- oder Falzkanten in dem Flachmaterial 1 - unabhängig von deren Bahngeschwindigkeit. Zur Überwachung der korrekten Form, Lage und Position der mittels des Strahlablenksystems 7 erzeugten Figuren dient ein Bildverarbeitungssystem 16, welches gleichfalls dem Regelkreis des Zentralrechners 15 angehört.

Im dargestellten und insoweit bevorzugten Ausführungsbeispiel ist das aus dem Walzenpaar 2 bestehende Prägewerkzeug hinter dem Strahlablenksystem 7 angeordnet. Der örtliche Versatz zwischen Prägewerkzeug und der eigentlichen Laserbearbeitung kann dabei bis zu mehreren Metern betragen. Wenn die Dehnung des Flachmaterials 1 mit berücksichtigt wird, kann das die Steuerimpulse für das Strahlablenksystem 7 liefernde Prägewerkzeug sogar zehn Meter hinter der eigentlichen Bearbeitungsstation angeordnet sein. Solche Dehnungserscheinungen lassen sich durch Zug-/ Druckdifferenzermittlung gleichfalls über den Zentralrechner kompensieren, so daß Genauigkeiten ≤ 0,5 mm bezüglich der Konturentreue der Perforationslinienfiguren eingehalten werden können.

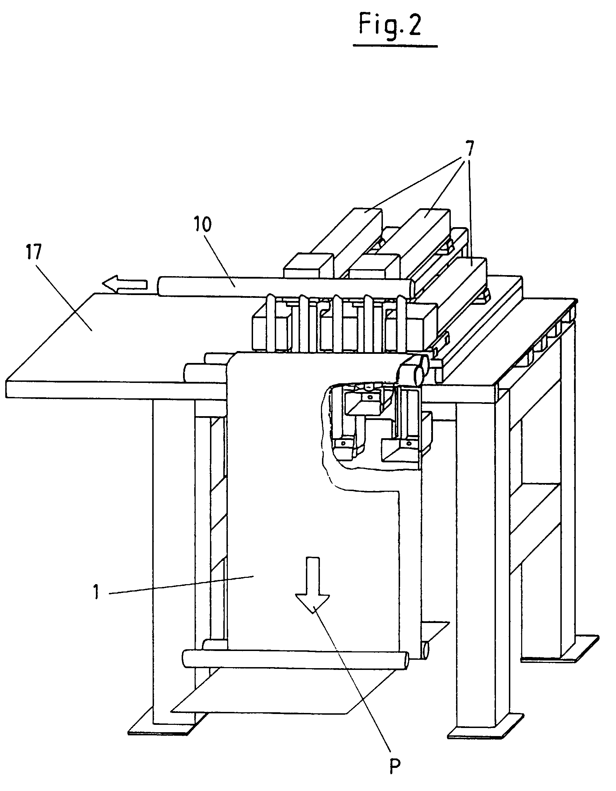

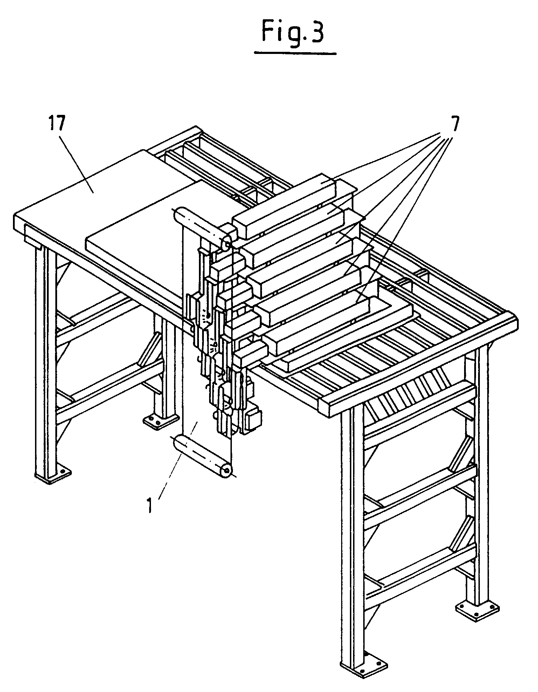

Die Fig. 2 und 3 zeigen zwei unterschiedliche Ausführungsformen der Anordnung der erfindungsgemäßen Strahlablenksysteme 7. In beiden Fällen sind mehrere Strahlablenksysteme 7 vorgesehen. In Fig. 2 ist dargestellt, daß diese Strahlablenksysteme 7 in mehreren senkrecht zum Flachmaterial 1 und quer dazu verlaufenden prallelen Ebenen angeordnet sind. Dazu sind die einzelnen Strahlablenksysteme 7 auf einer Lastenbrücke 17 seitlich verschiebbar angeordnet. Die seitliche Positionierung erfolgt dabei über einen Schrittmotorantrieb und eine Spindel, ohne daß diese Konstruktionsteile dargestellt sind. Eine alternative Anordnung der erfindungsgemäßen Vorrichtung ist in Fig. 3 dargestellt. Dabei sind auf der Lastenbrücke 17 wiederum mehrere Strahlablenksysteme 7 angeordnet, die bei diesem Ausführungsbeispiel in einer senkrecht zum Flachmaterial 1 und diagonal dazu verlaufenden Ebene angeordnet sind.

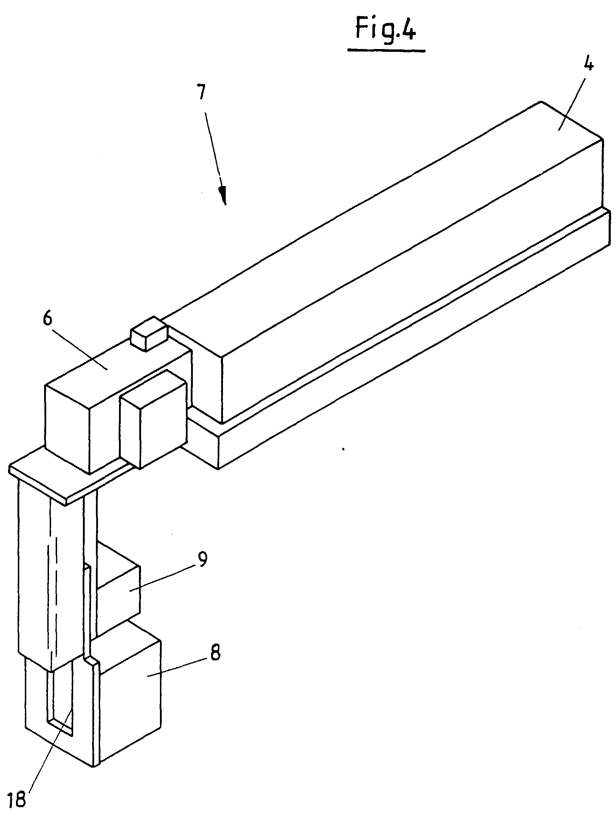

Zur besseren Verdeutlichung ist in Fig. 4 noch einmal ein Strahlablenksystem 7 im einzelnen dargestellt. Der im Laser 4 erzeugte Laserstrahl 5 durchläuft zunächst die dynamische Linsenverstelleinheit 6, in der die z-Achsenverstellung vorgenommen wird, anschließend das Strahlanalyse- und -überwachungssystem 9 und schließlich den x-y-Scanner 8, in der die eigentliche Mustererzeugung durch jeweils einen in x- und y-Richtung ablenkbaren Spiegel erfolgt. Der Laserstrahl 5 verläßt dann den x-y-Scanner 8 durch eine Öffnung 18 für die eigentliche Bearbeitung des Flachmaterials 1.

Nachfolgend sei noch kurz die Funktion der erfindungsgemäßen Vorrichtung näher beschrieben:

Zunächst wird die Geschwindigkeit des Flachmaterials 1 mittels eines Inkrementalgebers 3 über die Umfangsgeschwindigkeit der dort angeordneten nicht näher bezeichneten Rollen oder mittels eines berührungslosen Meßverfahrens, z. B. mit einem Laserdoppleranemomenter (nicht dargestellt) ermittelt. Die Ansteuerung des Strahlablenksystems 7 erfolgt dabei in Abhängigkeit eines von den in dem vom Walzenpaar 2 gebildeten Prägewerkzeug erzeugten Knick- oder Falzkanten ausgehenden Startsignals. Dabei wird die Strahllage bzw. die Strahlintensität jedes Laserstrahls 5 durch den Zentralrechner 15 in Abhängigkeit von der ermittelten Geschwindigkeit des Flachmaterials 1 und der ermittelten Lage der Knick- oder Falzkanten überwacht.

Mit einer Verschiebung der für das Laserstartsignal notwendigen Inkrementalgeber-Zählimpulse zum Inkrementalgeber-Nullageimpuls in positiver bzw. negativer Richtung ist eine Verschiebung der Position der gelaserten Bilder, Muster oder dergleichen auf dem Flachmaterial 1 in oder gegen die Bandlaufrichtung möglich. Durch die Synchronisation der Geschwindigkeitsimpulse mit dem Nullageimpuls des Prägewerkzeugs können sich wiederholende Strukturen bei ständig variabler Geschwindigkeit im Bereich von bis zu 300 m/min an gleicher Zuschnittposition erzeugt werden.

## Patentansprüche

1. Verfahren zum Schneiden, Perforieren oder Beschriften von wiederkehrenden Mustern in kontinuierlich bewegtes Flachmaterial, insbesondere Verbundmaterial, durch örtliche Verdampfung des Flachmaterials mit wenigstens einem steuerbaren Laserstrahl aus wenigstens einem Strahlablenksystem, wobei jeder Laserstrahl relativ zum Flachmaterial in zwei senkrecht zueinanderstehenden Richtungen x und y aus einem festen Punkt beweglich ist, **gekennzeichnet durch** die folgenden Schritte:
- Detektieren der Bewegungsgeschwindigkeit des Flachmaterials (1),
- Aufbringen von Knick- oder Falzkanten auf das bewegte Flachmaterial (1) und Detektieren ihrer Lage,
- Ansteuerung des Strahlablenksystems (7) zur Ausfürung des Schneid-, Perforier- oder Schreib-Vorgangs in Abhängigkeit eines durch das Detektieren der Knick- oder Falzkanten erzeugten Synchronisations-Impulses und der detektierten Bewegungsgeschwindigkeit des Flachmaterials (1) und
- Überwachung der Strahllage/Strahlintensität jedes Laserstrahls (5) in Abhängigkeit von der ermittelten Bewegungsgeschwindigkeit des Flachmaterials (1) und den ermittelten Knick- oder Falzkanten.

2. Verfahren nach Anspruch 1,
**dadurch gekennzeichnet**, daß die Position des erzeugten Musters zu den aufgebrachten Knick- oder Falzkanten überwacht und reguliert wird.

3. Verfahren nach Anspruch 1 oder 2,
**dadurch gekennzeichnet**, daß die Intensität des Laserstrahls (5) veränderbar ist.

4. Verfahren nach Anspruch 3,
**dadurch gekennzeichnet**, daß zur Veränderung der Strahlintensität eine Optik zur Verstellung der Brennweite der z-Achse des Laserstrahls (5) eingesetzt wird.

5. Verfahren nach Anspruch 3,
**dadurch gekennzeichnet**, daß zur Veränderung der Strahlintensität die Laserleistung variiert wird.

6. Vorrichtung zum Schneiden, Perforieren oder Beschriften von wiederkehrenden Mustern in kontinuierlich bewegtes Flachmaterial, insbesondere Verbundmaterial, durch örtliche Verdampfung des Flachmaterials mit wenigstens einem steuerbaren Laserstrahl aus wenigstens einem Strahlablenksystem, wobei jeder Laserstrahl relativ zum Flachmaterial in zwei senkrecht zueinanderstehenden Richtungen x und y aus einem festen Punkt beweglich ist, **dadurch gekennzeichnet**, daß ein Element zur Ermittlung der Geschwindigkeit des Flachmaterials (1) vorgesehen ist, daß wenigstens ein Prägewerkzeug zum Einbringen von Knick- oder Falzkanten in das bewegte Flachmaterial (1) vorgesehen ist und daß das Prägewerkzeug mit einem Inkrementalgeber (13) versehen ist, mit dem die Lage der Prägewerkzeugkanten in bezug auf das Flachmaterial (1) detektierbar ist, wodurch ein Synchronisations-Impuls zur Ansteuerung des Strahlablenksystems/der Strahlablenksysteme (7) erzeugt wird, der/die den Schneid-, Perforier- oder Schreib-Vorgang ausführt/ausführen.

7. Vorrichtung nach Anspruch 6,
**dadurch gekennzeichnet**, daß ein Strahlanalyse- und -überwachungssystem (9) vorhanden ist.

8. Vorrichtung nach Anspruch 6 oder 7,
**dadurch gekennzeichnet**, daß Mittel vorhanden sind, mit denen die Position der erzeugten Muster zu den aufgebrachten Knick- und Falzkanten überwacht und reguliert werden.

9. Vorrichtung nach Anspruch 8,
**dadurch gekennzeichnet**, daß als Mittel zur Überwachung und Regulierung der Position der erzeugten Muster ein Bildverarbeitungssystem (16) vorgesehen ist.

10. Vorrichtung nach einem der Ansprüche 6 bis 9,
**dadurch gekennzeichnet**, daß als Element zur Ermittlung der Geschwindigkeit des Flachmaterials (1) ein weiterer Inkrementalgeber (3) vorgesehen ist.

11. Vorrichtung nach Anspruch 6,
**dadurch gekennzeichnet**, daß als Element zur Ermittlung der Geschwindigkeit des Flachmaterials (1) ein Laserdoppleranemometer vorgesehen ist.

12. Vorrichtung nach einem der Ansprüche 6 bis 11,
**dadurch gekennzeichnet**, daß das Prägewerkzeug in Laufrichtung des Flachmaterials (1) vor dem Strahlablenksystem (7) angeordnet ist.

13. Vorrichtung nach einem Ansprüche 6 bis 11,
**dadurch gekennzeichnet**, daß das Prägewerkzeug in Laufrichtung des Flachmaterials (1) hinter dem Strahlablenksystem (7) angeordnet ist.

14. Vorrichtung nach einem der Ansprüche 6 bis 13,
**dadurch gekennzeichnet**, daß mehrere Strahlablenksysteme (7) vorgesehen und in mehreren senkrecht zum Flachmaterial (1) und quer zu seiner Bewegungsrichtung verlaufenden parallelen Ebenen angeordnet sind.

15. Vorrichtung nach einem der Ansprüche 6 bis 13,
**dadurch gekennzeichnet**, daß mehrere Strahlablenksysteme (7) vorgesehen und in einer senkrecht zum Flachmaterial (1) und diagonal zu seiner Bewegungsrichtung verlaufenden Ebene angeordnet sind.

16. Vorrichtung nach einem der Ansprüche 6 bis 15,
**dadurch gekennzeichnet**, daß jedes Strahlablenksystem (7) seitlich positionierbar ist.

17. Vorrichtung nach Anspruch 16,
**dadurch gekennzeichnet**, daß zur seitlichen Positionierung ein Schrittmotorantrieb und eine Spindel vorgesehen sind.

18. Vorrichtung nach einem der Ansprüche 6 bis 17,
**dadurch gekennzeichnet**, daß der Inkrementalgeber (13) hochauflösend ist.

19. Vorrichtung nach einem der Ansprüche 6 bis 18,
**dadurch gekennzeichnet**, daß als Laser (4) ein CO₂-Laser vorgesehen ist.

20. Vorrichtung nach einem der Ansprüche 6 bis 19,
**dadurch gekennzeichnet**, daß in Bewegungsrichtung des Flachmaterials (1) hinter dem Strahlablenksystem (7) eine Absaughaube (10) zur Entfernung des bei der örtlichen Verdampfung anfallenden Staubes vorgesehen ist.

## Claims

1. A method of cutting, perforating or inscribing repeat patterns on continuously moving flat material, especially a laminated material, by local vaporization of the flat material with at least one controllable laser beam from at least one beam deflection system, with each laser beam being movable from a fixed point in two perpendicular directions x and y relative to the flat material, characterized by the following steps:
- detecting the speed of travel of the flat material (1);
- applying the bending or folding edges to the moving flat material (1) and detecting their positions;
- controlling the beam deflection system (7) to perform the cutting, perforation or inscription procedure as a function of the synchronization pulse created by detection of the bending or folding edges and the detected velocity of movement of the flat material (1), and
- monitoring the beam position/beam intensity of each laser beam (5) as a function of the detected velocity of movement of the flat material (1) and the detected bending or folding edges.

2. A method according to Claim 1, characterized in that the position of the pattern created is monitored and regulated with regard to the applied bending or folding edges.

3. A method according to Claim 1 or 2, characterized in that the intensity of the laser beam (5) is variable.

4. A method according to Claim 3, characterized in that to change the beam intensity, a lens for adjusting the focus of the z axis of the laser beam (5) is used.

5. A method according to Claim 3, characterized in that the laser power is varied in order to change the beam intensity.

6. A method of cutting, perforation or inscription of repeat patterns on continuously moving flat material, in particular a laminated material, by localized vaporization of the flat material with at least one controllable laser beam from at least one beam deflection system, where each laser beam is movable from a fixed point in two perpendicular directions x and y, relative to the flat material characterized in that an element for detecting the velocity of the flat material (1) is provided, and at least one embossing tool for introducing bending or cutting edges into the moving flat material (1) is provided with an incremental generator (13) for detecting the position of the embossing tool edges in relation to the flat material (1), with a synchronization pulse being generated for controlling the beam deflection systems (7) which execute(s) the cutting, perforating or inscribing operations.

7. A device according to Claim 6, characterized in that a beam analysis and monitoring system (9) is provided.

8. A device according to Claim 6 or 7, characterized in that means are provided with which the position of the generated pattern relative to the applied bending or folding edges can be monitored and regulated.

9. A device according to Claim 8, characterized in that an image processing system (16) is provided as a means for supervising and regulating the position of the generated pattern.

10. A device according to Claims 6 through 9, characterized in that an additional incremental generator (3) is provided as the element for determining the speed of the flat material (1).

11. A device according to Claim 6, characterized in that a laser Doppler anemometer is provided as the element for determining the velocity of the flat material (1).

12. A device according to one of the Claims 6 through 11, characterized in that the embossing tool is arranged upstream from the beam deflection system (7) in the direction of feed of the flat material (1).

13. A device according to one of the Claims 6 through 11, characterized in that the embossing tool is arranged downstream from the beam deflection system (7) in the direction of feed of the flat material (1).

14. A device according to one of the Claims 6 through 13, characterized by the fact that multiple beam deflection systems (7) are provided and are arranged in several parallel planes running perpendicular to the flat material (1) and across its direction of travel.

15. A device according to one of the Claims 6 through 13, characterized in that several beam deflection systems (7) are provided and arranged in a plane perpendicular to the flat material (1) and diagonal to its direction of motion.

16. A device according to one of Claims 6 through 15, characterized in that each beam deflection system (7) can be positioned laterally.

17. A device according to Claim 16, characterized in that a stepping motor drive and a spindle are provided for lateral positioning.

18. A device according to one of the Claims 6 through 17, characterized in that the incremental generator (13) has a high resolution.

19. A device according to one of the Claims 6 through 18, characterized in that a CO₂ laser is provided as laser (4).

20. A device according to one of the Claims 6 through 19, characterized in that a suction hood (10) is provided downstream from the beam deflection system (7) in the direction of travel of the flat material (1) for removing the dust accumulating during the localized vaporization.

## Revendications

1. Procédé pour reproduire par découpage, perforage ou marquage des figures récurrentes dans un matériau plat déplacé en continu, matériau composite notamment, par vaporisation locale du matériau plat à l'aide d'au moins un faisceau laser commandable provenant d'au moins un système déflecteur de faisceau, chaque faisceau laser étant mobile à partir d'un point fixe par rapport au matériau plat dans deux directions x et y mutuellement perpendiculaires, **caractérisé** par les étapes suivantes :
- détection de la vitesse de déplacement du matériau plat (1),
- apposition d'arêtes de flexion ou de pliage sur le matériau plat déplacé (1), et détection de leur position,
- commande du système déflecteur de faisceau (7) pour réaliser l'opération de découpage, perforage ou marquage en fonction d'une impulsion de synchronisation produite par la détection des arêtes de flexion ou de pliage, et de la vitesse détectée de déplacement du matériau plat (1), et
- surveillance de la position/de l'intensité de rayonnement de chaque faisceau laser (5) en fonction de la vitesse déterminée de déplacement du matériau plat (1) et des arêtes détectées de flexion ou de pliage.

2. Procédé selon la revendication 1, **caractérisé** en ce qu'on surveille et régule la position de la figure produite par rapport aux arêtes apposées de flexion ou de pliage.

3. Procédé selon la revendication 1 ou 2, **caractérisé** en ce que l'intensité du faisceau laser (5) peut être modifiée.

4. Procédé selon la revendication 3, **caractérisé** en ce que, pour modifier l'intensité du faisceau, on utilise une unité optique pour régler la distance focale de l'axe z du faisceau laser (5).

5. Procédé selon la revendication 3, **caractérisé** en ce que , pour modifier l'intensité du faisceau, on fait varier la puissance du laser.

6. Dispositif pour reproduire par découpage, perforage ou marquage des figures récurrentes dans un matériau plat déplacé en continu, matériau composite notamment, par vaporisation locale du matériau plat à l'aide d'un moins un faisceau laser commandable provenant d'au moins un système déflecteur de faisceau, chaque faisceau laser étant mobile à partir d'un point fixe par rapport au matériau plat dans deux directions x et y mutuellement perpendiculaires, **caractérisé** en ce qu'il est prévu un élément pour déterminer la vitesse du matériau plat (1), en ce qu'il est prévu au moins un outil de gravure pour apposer des arêtes de flexion ou de pliage dans le matériau plat déplacé (1), et en ce que l'outil de gravure est pourvu d'un capteur incrémentiel (13) qui permet de détecter la position des arêtes de l'outil de gravure par rapport au matériau plat (1), de sorte qu'est produite une impulsion de synchronisation pour asservir le ou les systèmes déflecteurs de faisceau (7) qui accomplissent l'opération de découpage, perforage ou marquage.

7. Dispositif selon la revendication 6, **caractérisé** en ce qu'un système (9) d'analyse et de surveillance de faisceau est présent.

8. Dispositif selon la revendication 6 ou 7, **caractérisé** en ce que des moyens sont présents, qui surveillent et régulent la position des figures produites par rapport aux arêtes apposées de flexion et de pliage.

9. Dispositif selon la revendication 8, **caractérisé** en ce qu'un système (16) de traitement d'images est prévu comme moyen de surveillance et de régulation de la position des figures produites.

10. Dispositif selon une quelconque des revendications 6 à 9, **caractérisé** en ce qu'un autre capteur incrémentiel (3) est prévu comme élément pour déterminer la vitesse du matériau plat (1).

11. Dispositif selon la revendication 6, **caractérisé** en ce qu'un anémomètre de laser à effet Doppler est prévu comme élément pour déterminer la vitesse du matériau plat (1).

12. Dispositif selon une quelconque des revendications 6 à 11, **caractérisé** en ce que l'outil de gravure est disposé avant le système déflecteur de faisceau (7) dans la direction de déplacement du matériau plat (1).

13. Dispositif selon une quelconque des revendications 6 à 11, **caractérisé** en ce que l'outil de gravure est disposé après le système déflecteur de faisceau (7) dans la direction de déplacement du matériau plat (1).

14. Dispositif selon une quelconque des revendications 6 à 13, **caractérisé** en ce que plusieurs systèmes déflecteurs de faisceau (7) sont prévus, et ils sont disposés dans plusieurs plans parallèles s'étendant perpendiculairement au matériau plat (1) et transversalement à sa direction de déplacement.

15. Dispositif selon une quelconque des revendications 6 à 13, **caractérisé** en ce que plusieurs systèmes déflecteurs de faisceau (7) sont prévus, et ils sont disposés dans un plan s'étendant perpendiculairement au matériau plat (1) et diagonalement à sa direction de déplacement.

16. Dispositif selon une quelconque des revendications 6 à 15, **caractérisé** en ce que chaque système déflecteur de faisceau (7) peut être positionné latéralement.

17. Dispositif selon la revendication 16, **caractérisé** en ce qu'un entraînement à moteur pas à pas et une broche sont prévus pour le positionnement latéral.

18. Dispositif selon une quelconque des revendications 6 à 17, **caractérisé** en ce que le capteur incrémentiel (13) est à haute résolution.

19. Dispositif selon une quelconque des revendications 6 à 18, **caractérisé** en ce qu'un laser au CO₂ est prévu comme laser (4).

20. Dispositif selon une quelconque des revendications 6 à 19, **caractérisé** en ce qu'un capot d'aspiration (10) est prévu derrière le système déflecteur de faisceau (7), dans la direction de déplacement du matériau plat (1), pour éliminer la poussière produite lors de la vaporisation locale.
